# EUROPÄISCHE PATENTSCHRIFT

(11) **EP 1 045 154 B1**
(45) Veröffentlichungstag und Bekanntmachung des Hinweises auf die Patenterteilung: **18.09.2002**
(21) Anmeldenummer: 99107510.2
(22) Anmeldetag: 15.04.1999
(51) Int. Cl.: F16C 1/22, F16C 1/14

(54) **Verbindungsanordnung für ein auf einem Bolzen eines Stellgliedes zu montierendes Ende eines Betätigungszuges**
Coupling device for the end of a control cable to be mounted on the stud of an actuator
Dispositif de connexion pour l'extrémité d'un câble de commande à monter sur le téton d'un actionneur

(43) Veröffentlichungstag der Anmeldung: 18.10.2000
(73) Patentinhaber: Ford Global Technologies, Inc., A subsidiary of Ford Motor Company, Dearborn, Michigan 48126 (US)
(72) Erfinder: Oeltjebruns, Thomas, 50259 Pulheim (DE)
(74) Vertreter: Drömer, Hans-Carsten, Dipl.-Ing.

(56) Entgegenhaltungen:
- DE-A- 4 135 309
- DE-U- 8 810 699
- DE-U- 29 509 798

## Beschreibung

Die Erfindung bezieht sich auf eine Verbindungsanordnung für ein auf einem Bolzen eines Stellgliedes zu montierendes Ende eines Betätigungszuges, der im Oberbegriff des Patentanspruches 1 erläuterten Art.

Aus der DE 41 35 309 C2 ist eine Befestigungseinrichtung zur formschlüssigen Befestigung eines Betätigungselementes, insbesondere eines Seilzuges an einem Bolzen eines Stellgliedes bekannt, bei der ein Koppelteil eine rechteckige Ausnehmung aufweist, die an wenigstens einer sich in Achsrichtung des Betätigungselementes erstreckenden Innenseite mit einer Verzahnung versehen ist und an einem sich hierzu senkrecht erstreckenden Bolzen eines Stellgliedes ein rechteckiges Verbindungsstück mit einer komplementär ausgebildeten Verzahnung aufgenommen ist, um eine Längeneinstellung zu bewerkstelligen.

Aus der EP 0 989 313 geht eine Montagesicherungsanordnung für ein auf einen Bolzen zu montierendes Ende eines Betätigungszuges hervor, wobei jedoch diese Rast-Verbindungsanordnung keine Längenverstellbarkeit vorsieht.

Die Aufgabe der Erfindung ist es, eine Rast-Verbindungsanordnung der in der früheren Patentanmeldung gezeigten Art derart zu verbessern, daß gleichzeitig mit dem Verbinden eine Längeneinstellung des Endes des Betätigungszuges ermöglicht wird.

Gemäß der Erfindung wird diese Aufgabe gelöst, indem bei einer Rast-Verbindungsanordnung für ein auf einem Bolzen eines Stellgliedes zu montierendes Ende eines Betätigungszuges gemäß dem Oberbegriff des Patentanspruches 1, die im Kennzeichenteil des Patentanspruches 1 aufgezeigten Maßnahmen vorgesehen werden.

Dadurch, daß die Ausnehmung eine rechteckige oder langlochförmige Wanne ist, in die eine Auskleidung aus elastischem Material unter Überwindung von an den beiden Längskanten ausgebildeten Haltekanten einsetzbar ist, die Auskleidung an beiden Längsseiten mit einer Verzahnung versehen ist und die den Bolzen des Stellgliedes aufnehmende zylindrische Rasthülse an ihrem Außenumfang mit einer entsprechenden Verzahnung versehen ist, die unter Überwindung der Rastkanten an den Längsseiten in Eingriff mit der Verzahnung in den Längskanten der Auskleidung bringbar ist, kann bei einem Einsetzen des Rastbolzens in die elastische Rasthülse, im gleichen Bewegungszug die Rasthülse in die Aufnahmeöffnung des Rastelementes eingesetzt werden und so unmittelbar eine Längeneinstellung des Endes des Betätigungszuges in einem Arbeitsgang erzielt werden.

Die Erfindung wird anhand eines in der Zeichnung gezeigten Ausführungsbeispieles näher erläutert. Es zeigt:
- Fig. 1: eine Unteransicht der erfindungsgemäßen Rast-Verbindungsanordnung für ein auf einen Bolzen eines Stellgliedes zu montierendes Ende eines Betätigungszuges mit einem in gestrichelten Linien gezeigten Stellglied und
- Fig. 2: einen Schnitt entlang der Linie II-II in Fig. 1.

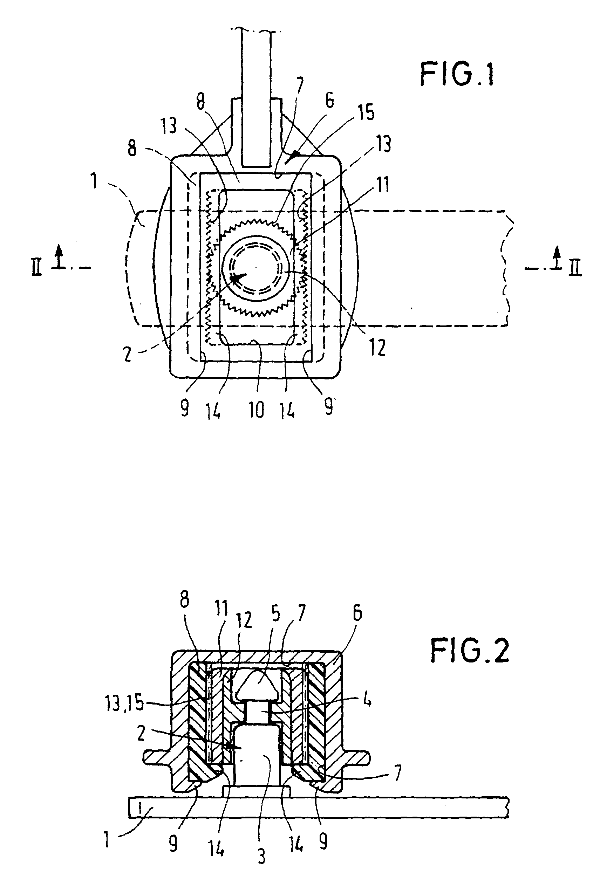

In den Figuren 1 und 2 ist ein Stellglied 1, z.B. ein Hebel, in einem Betätigungsgestänge eines Wechselgetriebes (nicht gezeigt) mit einem Bolzen 2 verbunden, der im wesentlichen drei Abschnitte, einen zylindrischen Abschnitt 3, einen im Durchmesser verringerten Rastabschnitt 4 und einen konischen Rastkopf 5 aufweist.

Ein Ende eines Betätigungszuges weist ein Koppelteil 6 auf, das mit einem Betätigungsgestänge oder Seilzug (nicht gezeigt) verbunden ist. Das Koppelteil 6 weist eine Ausnehmung 7 auf, in die eine Auskleidung 8 aus elastischem Material über Haltekanten 9 in der als eine rechteckige Wanne ausgebildeten Ausnehmung 7 gehalten, einrastbar ist.

Die Auskleidung 8 bildet ein Langloch 10, in das eine zylindrische Rasthülse 11 für den Bolzen 2 einsetzbar ist. In der Rasthülse 11 kann in an sich bekannter Weise eine Lagerhülse 12 aus einem härteren elastischen Material angeordnet sein.

Gemäß der Erfindung ist die elastische Auskleidung 8 an beiden Längskanten mit einer Verzahnung 13 versehen. Darüber hinaus weist die elastische Auskleidung 8 an ihrer einen Seite sich entlang ihrer Längskanten erstreckende Rastkanten 14 auf, unter deren Überwindung die zylindrische Rasthülse 11, die an ihrem Außenum-fang mit einer Verzahnung 15 versehen ist, in die elastische Auskleidung 8 einsetzbar ist, wobei die Feinverzahnungen 13 und 15 miteinander in Eingriff kommen.

Bei der Montage der erfindungsgemäßen Rast-Verbindungsanordnung wird zunächst im Ende des Betätigungszuges in der Ausnehmung 7 die elastische Auskleidung 8 eingesetzt.

Auf den Bolzen 2 am Betätigungselement wird die zylindrische Rasthülse 11 aufgesetzt und danach wird das entsprechende Betätigungsgestänge oder der Seilzug in die gewünschte gestreckte Lage gebracht und durch axiales Eindrücken des Bolzens 2 mit der aufgesetzten zylindrischen Rasthülse 11 in die elastische Auskleidung 8 eingesetzt, wodurch die Feinverzahnung 15 am Außenumfang der elastischen Rasthülse 11 in Eingriff mit der Feinverzahnung 13 in der Auskleidung 8 kommt und damit die Lage des Bolzens 2 innerhalb des Langloches 10 festlegt. Die seitlichen Rastkanten 14 der Auskleidung 8 werden hierbei örtlich elastisch verformt, um das Einsetzen zu ermöglichen.

Es wird darauf hingewiesen, daß die Erfindung nicht auf das gezeigte Ausführungsbeispiel beschränkt ist, sondern daß im Rahmen der Erfindung wie im Anspruch definiert vielfältige Ausführungen der Rasthülse in Verbindung mit der elastischen Auskleidung denkbar sind, um die lagefeste Verbindung der beiden Bauteile miteinander zu ermöglichen.

## Patentansprüche

1. Verbindungsanordnung für ein auf einem Bolzen (2) eines Stellgliedes (1) zu montierendes Ende eines Betätigungszuges (6), bei der ein Koppelteil (6) des Betätigungszuges eine rechteckige Ansnehmung (7) aufweist, in die seitlich ein Verbindungsstück mit einer Bohrung zur Aufnahme des Bolzens (2) einsetzbar ist, wobei die Ausnehmung (7) im Koppelteil (6) als ein Langloch (10) ausgebildet ist, das Langloch (10) an zumindest einer Längskante mit einer Verzahnung (13) versehen ist und das Verbindungsstück mit der Bohrung (10) für den Bolzen (2) an seinem Außenumfang mit einer komplementär ausgebildeten Verzahnung (15) versehen ist,
**dadurch gekennzeichnet, daß**
- im Koppelteil (6) eine rechteckige oder langlochförmige Wanne ausgebildet ist, in die eine Auskleidung (8) aus elastischem Material unter Überwindung von an den beiden Längskanten der Wanne ausgebildeten Haltekanten (9) einsetzbar ist,
- die Auskleidung (8) das Langloch (10) bildet, an dessen beiden Längsseiten die von Rastkanten (14) übergriffenen Verzahnungen (13) vorgesehen sind und
- das Verbindungsstück eine den Bolzen (2) des Stellgliedes (1) verrastend aufnehmende zylindrische Rasthülse (11) ist, die an ihrem Außenumfang mit der komplementären Verzahnung (15) versehen ist, die unter Überwindung der an den Längsseiten der Auskleidung (8) ausgebildete Rastkanten (14) in Eingriff mit den Verzahnungen (13) in den Längskanten der Auskleidung (8) bringbar ist.

## Claims

1. Connecting arrangement for a control cable (6) end to be mounted on a bolt (2) of an actuator (1), in which connecting arrangement a coupling part (6) of the control cable has a rectangular recess (7), into which a connection piece with a bore for receiving the bolt (2) can be inserted, the recess (7) in the coupling part (6) being designed as a long hole (10), the long hole (10) being provided on at least one longitudinal edge with a toothing (13), and the connection piece with the bore (10) for the bolt (2) being provided on its outer circumference with a complementarily designed toothing (15),
**characterized in that**
- formed in the coupling part (6) is a rectangular or long-hole-shaped trough, into which a lining (8) consisting of elastic material can be inserted, at the same time overcoming holding edges (9) formed on the two longitudinal edges of the trough,
- the lining (8) forms the long hole (10), on the two longitudinal sides of which are provided the toothings (13), over which locking edges (14) are engaged, and
- the connection piece is a cylindrical locking sleeve (11) which interlockingly receives the bolt (2) of the actuator (1) and which is provided on its outer circumference with the complementary toothing (15) which, at the same time overcoming the locking edges (14) formed on the longitudinal sides of the lining (8), can be brought into engagement with the toothings (13) in the longitudinal edges of the lining (8).

## Revendications

1. Dispositif de connexion pour une extrémité d'un câble de commande (6) à monter sur un téton (2) d'un actionneur (1), dans lequel une pièce de couplage (6) du câble de commande présente un évidement rectangulaire (7), dans lequel peut être introduite latéralement une pièce de connexion avec un alésage destiné à recevoir le téton (2), dans lequel l'évidement (7) dans la pièce de couplage (6) a la forme d'un trou allongé (10), le trou allongé (10) est pourvu d'une denture (13) sur au moins une arête longitudinale et la pièce de connexion avec l'alésage (10) pour le téton (2) est pourvue à son pourtour extérieur d'une denture (15) de forme complémentaire, **caractérisé en ce que**
- une cuvette rectangulaire ou en forme de trou allongé est façonnée dans la pièce de couplage (6), cuvette dans laquelle une garniture (8) en matière élastique peut être introduite sous le surplomb d'arêtes de maintien (9) formées sur les deux arêtes longitudinales de la cuvette,
- la garniture (8) forme le trou allongé (10), sur les deux longs côtés duquel sont prévues les dentures (13) recouvertes par des arêtes d'accrochage (14), et
- la pièce de connexion est une douille d'accrochage cylindrique (11) retenant par accrochage le téton (2) de l'actionneur (1), qui est pourvue à son pourtour extérieur de la denture complémentaire (15), qui peut être mise en prise avec les dentures (13) formées dans les arêtes longitudinales de la garniture (8) sous le surplomb des arêtes d'accrochage (14) formées sur les longs côtés de la garniture (8).
